(19) Europäisches Patentamt / European Patent Office / Office européen des brevets

(11) **EP 3 937 367 B1**

(12) **EUROPEAN PATENT SPECIFICATION**

(45) Date of publication and mention
of the grant of the patent:
**15.05.2024  Bulletin 2024/20**

(21) Application number: **19918289.0**

(22) Date of filing: **04.03.2019**

(51) International Patent Classification (IPC):
*H02P 6/18* *(2016.01)*          *H02P 6/26* *(2016.01)*
*H02P 25/04* *(2006.01)*         *H02P 6/182* *(2016.01)*

(52) Cooperative Patent Classification (CPC):
**H02P 6/26; H02P 6/182; H02P 25/04**

(86) International application number:
**PCT/JP2019/008426**

(87) International publication number:
**WO 2020/178955 (10.09.2020 Gazette 2020/37)**

(54) **MOTOR DRIVE DEVICE, ELECTRIC BLOWER, ELECTRIC VACUUM CLEANER, AND HAND DRYER**

MOTORANTRIEBSVORRICHTUNG, ELEKTRISCHES GEBLÄSE, ELEKTRISCHER STAUBSAUGER UND HANDTROCKNER

DISPOSITIF D'ENTRAÎNEMENT DE MOTEUR, VENTILATEUR ÉLECTRIQUE, ASPIRATEUR ÉLECTRIQUE ET SÈCHE-MAINS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**12.01.2022  Bulletin 2022/02**

(73) Proprietor: **MITSUBISHI ELECTRIC CORPORATION**
**Chiyoda-ku**
**Tokyo 100-8310 (JP)**

(72) Inventors:
• **MATSUO, Haruka**
  **Tokyo 100-8310 (JP)**
• **TAKAYAMA, Yuji**
  **Tokyo 100-8310 (JP)**
• **HATAKEYAMA, Kazunori**
  **Tokyo 100-8310 (JP)**

(74) Representative: **Mewburn Ellis LLP**
**Aurora Building**
**Counterslip**
**Bristol BS1 6BX (GB)**

(56) References cited:
**EP-A1- 3 059 852        EP-A2- 1 942 575
WO-A1-2017/077599   WO-A1-2018/229874
JP-B2- 6 375 431        US-A1- 2013 234 631**

**Description**

Field

The present invention relates to a motor driving apparatus for controlling the operation of a single-phase motor and also relates to an electric blower, a vacuum cleaner, and a hand dryer.

Background

Recently, an increasing number of motors are small-sized and are capable of providing high power. For the purpose of driving a motor with high efficiency, a device for controlling the motor operation is equipped with a position sensor for detecting a rotational position of a rotor of the motor. In a technique disclosed in Patent Literature 1, a motor assembly detects a position of a rotor and adjusts a timing of commutation of the motor current on the basis of rotor position information to improve motor efficiency.

Citation List

Patent Literature

Patent Literature 1: Japanese Patent Application Laid-open No. 2017-55658
US 2013/234631 A1 (BATEMAN CHRISTOPHER JOHN [GB]) 12 September 2013 (2013-09-12) discloses a method of determining the position of a rotor of a permanent-magnet motor using two different schemes to determine the position of the rotor.

Summary

Technical Problem

In the above conventional technique, the motor assembly uses a position sensor to detect the position of the motor's rotor. For this reason, the accurate detection of the rotor position requires installing accurately the position sensor in manufacturing the motor assembly. This problematically increases the manufacturing cost. Moreover, the motor and the motor assembly equipped with the position sensor need to be an integral structure, which is a problematic constraint on design of an apparatus including the motor assembly and the motor.
The present invention has been made in view of the above problem, and an object of the present invention is to obtain a motor driving apparatus that is capable of efficiently driving a single-phase motor without using a position sensor. This problem is solved by a motor driving apparatus according to claims 1 and 5.

Brief Description of Drawings

FIG. 1 illustrates a configuration example of a motor driving apparatus according to a first embodiment.
FIG. 2 illustrates a circuit configuration of an inverter included in the motor driving apparatus according to the first embodiment.
FIG. 3 illustrates an example of alternating-current voltage that the inverter of the motor driving apparatus according to the first embodiment outputs to a single-phase motor, and an example of induced voltage in the single-phase motor.
FIG. 4 illustrates an example of the alternating-current voltage to be output from the inverter of the motor driving apparatus according to the first embodiment, an example of the induced voltage in the single-phase motor, an example of current flowing through the single-phase motor, and examples of three thresholds for the current.
FIG. 5 illustrates alternating-current voltage that is supplied by the inverter of the motor driving apparatus according to the first embodiment, and count-ups performed inside a processor of a control unit.
FIG. 6 illustrates the thresholds in the motor driving apparatus according to the first embodiment that vary depending on rotational speed of the single-phase motor.
FIG. 7 illustrates examples of the first, second, and third thresholds to be used by the control unit of the motor driving apparatus according to the first embodiment that are based on the rotational speed of the single-phase motor.
FIG. 8 illustrates the alternating-current voltage that is supplied from the inverter of the motor driving apparatus according to the first embodiment, the induced voltage in the single-phase motor, the current flowing through the single-phase motor, and one of the thresholds for the current.

FIG. 9 illustrates examples of the first, second, and third thresholds to be used by the control unit of the motor driving apparatus according to the first embodiment that are based on direct-current voltage.

FIG. 10 illustrates a first example of average alternating-current voltage as a result of averaging performed on the alternating-current voltage that the inverter of the motor driving apparatus according to the first embodiment outputs to the single-phase motor.

FIG. 11 illustrates a second example of the average alternating-current voltage as a result of averaging performed on the alternating-current voltage that the inverter of the motor driving apparatus according to the first embodiment outputs to the single-phase motor.

FIG. 12 is a first flowchart illustrating an operation of the control unit of the motor driving apparatus according to the first embodiment.

FIG. 13 is a second flowchart illustrating an operation of the control unit of the motor driving apparatus according to the first embodiment.

FIG. 14 is a third flowchart illustrating an operation of the control unit of the motor driving apparatus according to the first embodiment.

FIG. 15 is a fourth flowchart illustrating an operation of the control unit of the motor driving apparatus according to the first embodiment.

FIG. 16 illustrates a configuration example of a vacuum cleaner according to a second embodiment that includes the motor driving apparatus.

FIG. 17 illustrates a configuration example of a hand dryer according to the second embodiment that includes the motor driving apparatus.

Description of Embodiments

With reference to the drawings, a detailed description is hereinafter provided of a motor driving apparatus, an electric blower, a vacuum cleaner, and a hand dryer according to embodiments of the present invention. It is to be noted that these embodiments are not restrictive of the present invention. The following description focuses on examples of application to single-phase motors but is not intended to exclude application to other uses.

First Embodiment

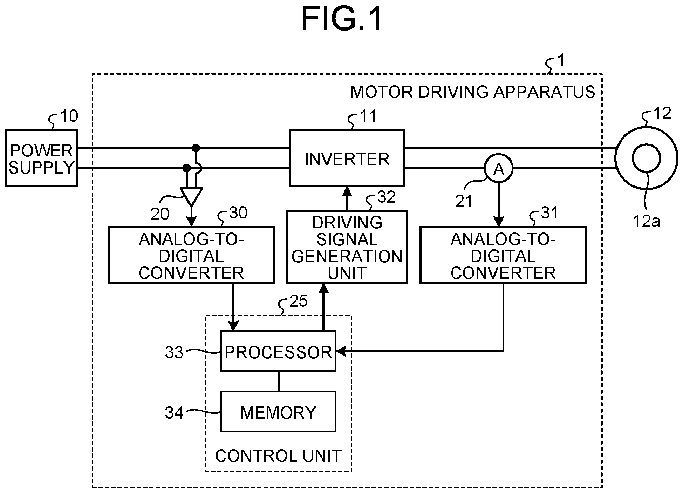

FIG. 1 illustrates a configuration example of a motor driving apparatus 1 according to a first embodiment of the present invention. The motor driving apparatus 1 is connected to a power supply 10 and a single-phase motor 12. The motor driving apparatus 1 controls driving of the single-phase motor 12.

The power supply 10 supplies direct-current voltage $V_{dc}$ to the motor driving apparatus 1. The power supply 10 may be a battery that supplies the direct-current voltage $V_{dc}$ directly or a circuit that converts alternating-current voltage obtained from an external source such as an electrical outlet into the direct-current voltage $V_{dc}$.

The single-phase motor 12 is a motor to be driven by the motor driving apparatus 1. The single-phase motor 12 is preferably a brushless motor. In the brushless motor, a rotor 12a includes a plurality of permanent magnets (not illustrated) arranged in a rotation direction, that is to say, along an outer periphery of the motor. The permanent magnets are disposed in such a manner as to be magnetized in directions reversed in an alternating manner in the rotation direction, and form a plurality of magnetic poles of the rotor 12a. The single-phase motor 12 rotates the rotor 12a having the permanent magnets disposed as stated above. Although not illustrated, a stator of the single-phase motor 12 has a motor winding wound thereon. Motor current is alternating current that flows through the motor winding. In the present embodiment, the magnetic poles are four in number, but there may be any other number of magnetic poles. A vacuum cleaner equipped with an electric blower is given as an example of a load for the single-phase motor 12. Although, in practice, the rotor 12a of the single-phase motor 12, for the sake of convenience of explanation, the description includes the expression "rotation of the single-phase motor 12" and "rotational speed of the single-phase motor 12", for example.

A description is provided of the configuration of the motor driving apparatus 1. The motor driving apparatus 1 includes an inverter 11, a voltage detection unit 20, a current detection unit 21, a control unit 25, analog-to-digital converters 30 and 31, and a driving signal generation unit 32. The control unit 25 includes a processor 33 and a memory 34.

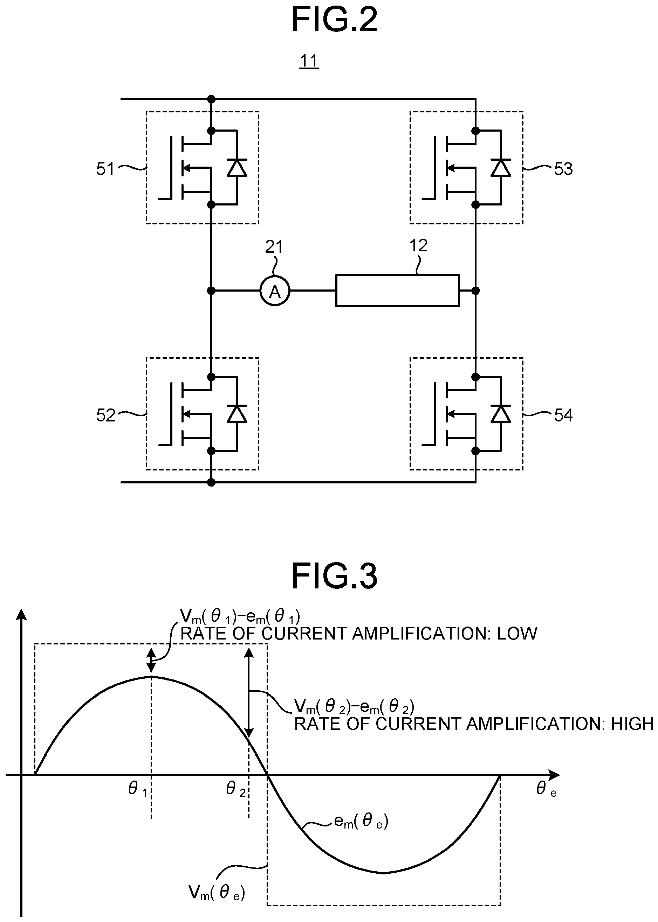

The inverter 11 is connected to the single-phase motor 12 and outputs alternating-current voltage to the single-phase motor 12. FIG. 2 illustrates a circuit configuration of the inverter 11 included in the motor driving apparatus 1 according to the first embodiment. The inverter 11 includes switching elements 51, 52, 53, and 54 connected in the form of a bridge. The inverter 11 converts, by using the switching elements 51 to 54, the direct-current voltage $V_{dc}$ into the alternating-current voltage and outputs the alternating-current voltage to the single-phase motor 12. The high-potential-side switching elements 51 and 53 are referred to as "upper-arm switching elements". The low-potential-side switching elements 52 and 54 are referred to as "lower-arm switching elements". A connection end between the switching elements 51 and 52 and a connection end between the switching elements 53 and 54 are alternating-current ends of the bridge circuit. The circuit configuration of the inverter 11 has the alternating-current ends connected to the single-phase motor 12.

Metal-oxide-semiconductor field-effect transistors (MOSFETs) are used as the switching elements 51 to 54. The MOSFET is an example of an FET. A diode connected in parallel between a drain and a source of each of the switching elements 51 to 54 is referred to as "freewheel diode". In the present embodiment, a body diode formed as a parasitic diode inside the MOSFET is used as a freewheel diode.

At least one of the switching element 51, the switching element 52, the switching element 53, or the switching element 54 can be made using a wide bandgap semiconductor. The wide band gap semiconductor is, for example, silicon carbide (SiC), gallium nitride (GaN), or diamond. With the use of the wide bandgap semiconductor for the at least one of the switching element 51, the switching element 52, the switching element 53, or the switching element 54, the switching element has increased voltage resistance and increased allowable current density, so that a semiconductor module incorporating the switching element is enabled to be smaller in size. Moreover, the wide bandgap semiconductor has a high thermal resistance, thus enabling a smaller-sized heat sink and simplified heat radiation structure.

The current detection unit 21 is a detection unit that detects a physical quantity representing an operation state of the single-phase motor 12. To be specific, the current detection unit 21 detects a value of the current flowing through the single-phase motor 12. A location where the current detection unit 21 is disposed is not limited as long as the value of the current flowing through the single-phase motor 12 is detectable. While the current detection unit 21 is connected in series with the single-phase motor 12 in FIG. 2, the current detection unit 21 may be disposed in series with the switching elements 51 to 54 or may be disposed at a power line or a ground line of the inverter 11. The present embodiment is described on the assumption that the current detection unit 21 is disposed in series with the single-phase motor 12. An example of a method for detecting the current by means of the current detection unit 21 includes inserting a resistor in a circuit to detect a voltage value and calculating a current value by means of Ohm's law. A method using a transformer, a method using a Hall effect, and any other method are also given for detection; however, any method may be used provided that the current value is detectable.

The voltage detection unit 20 is a detection unit that detects a physical quantity representing the operation state of the single-phase motor 12. To be specific, the voltage detection unit 20 detects the voltage that the power supply 10 outputs to the motor driving apparatus 1. The voltage detection unit 20 may be disposed anywhere provided that the voltage output to the motor driving apparatus 1 is detectable, and a detection method is not limited.

The current detection unit 21 and the voltage detection unit 20 of the motor driving apparatus 1 are examples of the detection unit that detects the physical quantity representing the operation state of the single-phase motor 12. The motor driving apparatus 1 may include another detection unit that detects a physical quantity representing the operation state of the single-phase motor 12.

The analog-to-digital converter 30 converts an analog signal indicating a voltage value detected by the voltage detection unit 20, into a digital signal. The analog-to-digital converter 31 converts an analog signal indicating the current value detected by the current detection unit 21, into a digital signal.

Using the voltage value obtained from the analog-to-digital converter 30 and the current value obtained from the analog-to-digital converter 31, the control unit 25 controls the alternating-current voltage to be output from the inverter 11 to the single-phase motor 12. In other words, the control unit 25 controls, in accordance with the physical quantities detected by the current detection unit 21 and the voltage detection unit 20, the alternating-current voltage to be output to the single-phase motor 12 from the inverter 11. The control unit 25 is capable of estimating rotational position of the rotor 12a in the single-phase motor 12, using the physical quantities detected by the current detection unit 21 and the voltage detection unit 20. The control unit 25 controls, in accordance with the physical quantities, that is to say, the estimated position of the rotor 12a, the alternating-current voltage to be output from the inverter 11 to the single-phase motor 12. On the basis of thresholds for the current value, as is described later, the processor 33 of the control unit 25 controls the alternating-current voltage to be output from the inverter 11 to the single-phase motor 12. The memory 34 holds, for example, parameters that are used for determining the thresholds to be used by the processor 33.

On the basis of signals output from the control unit 25, that is to say, a control operation result calculated by the processor 33, the driving signal generation unit 32 generates driving signals for driving the switching elements 51 to 54 of the inverter 11.

A description is provided next of operation of the motor driving apparatus 1. FIG. 3 illustrates an example of the alternating-current voltage $V_m(\theta_e)$ that the inverter 11 of the motor driving apparatus 1 according to the first embodiment outputs to the single-phase motor 12, and an example of induced voltage $e_m(\theta_e)$ in the single-phase motor 12. $\theta_e$ herein is an electrical angle indicating the position of the rotor 12a of the single-phase motor 12. $\theta_e$ is a variable that varies with time. Since the induced voltage $e_m(\theta_e)$ in the single-phase motor 12 varies with the electrical phase angle, as a matter of course, an amount of change in the current with respect to time, that is to say, a rate of change in the current flowing through the single-phase motor 12 varies in accordance with the variation of $\theta_e$.

The induced voltage $e_m(\theta_e)$ is electromotive force that is generated due to a change in magnetic flux through the coil of the single-phase motor 12 when the rotor 12a rotates. A value of the induced voltage $e_m(\theta_e)$ changes depending on, for example, the rotational speed of the single-phase motor 12, and orientations of the permanent magnets disposed in the rotor 12a. The induced voltage $e_m(\theta_e)$ generated is usually of sinusoidal waveform. The induced voltage $e_m(\theta_e)$ can be expressed by Formula (1) using an electrical angular velocity $\omega_e$ and a flux linkage symbol $\varphi_f$.

$$e_m(\theta_e) = \omega_e \times \varphi_f \times \sin\theta_e \quad \dots \quad (1)$$

Assuming that the alternating-current voltage $V_m(\theta_e)$ that the inverter 11 outputs to the motor winding (not illustrated) of the single-phase motor 12 is equivalent to the direct-current voltage $V_{dc}$ that the power supply 10 supplies to the inverter 11, the alternating-current voltage $V_m(\theta_e)$ changes depending on the electrical angle as shown in Formula (2).
[Formula 1]

$$V_{m(\theta_e)} = \begin{cases} V_{dc}, 0\left(0 \le \theta_e < \pi\right) \\ -V_{dc}, 0\left(\pi \le \theta_e < 2\pi\right) \end{cases} \quad \dots \quad (2)$$

When the electrical angular velocity is constant, $\theta_1$ and $\theta_2$ shown in FIG. 3 provide the relationships, $\pi/2 \le \theta_1 < \theta_2 < \pi$, $\sin\theta_1 > \sin\theta_2$, and $V_m(\theta_1) = V_m(\theta_2)$, so that Formula (3) below holds true.

$$V_m(\theta_1) - e_m(\theta_1) < V_m(\theta_2) - e_m(\theta_2) \quad \dots \quad (3)$$

Although, before being supplied to the motor winding, the direct-current voltage $V_{dc}$ drops due to, for example, wiring resistance and on-resistance of the switching elements 51 to 54, the voltage drop is a minute value and thus is not considered in the present embodiment. Here a circuit equation for the single-phase motor 12 can be expressed by Formula (4).
[Formula 2]

$$V_{m(\theta_e)} = RI_{m(\theta_e)} + L\frac{dI_{m(\theta_e)}}{dt} + e_{m(\theta_e)} \quad \dots \quad (4)$$

In Formula (4), R is a resistance component of the motor winding, $I_m(\theta_e)$ is the current flowing through the motor winding, L is an inductance component of the motor winding, and $dI_m(\theta_e)/dt$ represents the rate of change in the current $I_m(\theta_e)$ flowing through the motor winding. A left-hand side of Formula (4) refers to the alternating-current voltage that the inverter 11 outputs. A first term of a right-hand side of Formula (4) refers to a voltage drop caused by the resistance component of the motor winding. A second term of the right-hand side refers to a voltage resulting from a change in the current through the inductance of the motor winding. A third term of the right-hand side refers to the voltage induced in the single-phase motor 12 by the rotor 12a. With use of Formula (4) expressing the circuit equation for the single-phase motor 12, the rate of change in the current flowing through the motor winding can be expressed by Formula (5).
[Formula 3]

$$\frac{dI_{m(\theta_e)}}{dt} = \frac{1}{L}\left(V_{m(\theta_e)} - e_{m(\theta_e)} - RI_{m(\theta_e)}\right) \quad \dots \quad (5)$$

For simplicity, the resistance component R is taken as a minute value, and $RI_m(\theta_e)$ is ignored for $V_m(\theta_e) - e_m(\theta_e)$. Since $V_m(\theta_1) - e_m(\theta_1) < V_m(\theta_2) - e_m(\theta_2)$ as shown in Formula (3), the electrical angle $\theta_e$ of the single-phase motor 12 provides a magnitude relation between the rate of change in the current $I_m(\theta_1)$ and the rate of change in the current $I_m(\theta_s)$, as expressed by Formula (6).
[Formula 4]

$$\frac{dI_{m(\theta_1)}}{dt} < \frac{dI_{m(\theta_2)}}{dt} \qquad \cdots \quad (6)$$

As seen from this, the larger a difference between the alternating-current voltage $V_m(\theta_e)$ that the inverter 11 outputs and the induced voltage $e_m(\theta_e)$, the greater the rate of change in the current flowing through the motor winding of the single-phase motor 12. In other words, at the point $\theta_1$ in FIG. 3 where the induced voltage $e_m(\theta_e)$ is high, the potential difference between the induced voltage $e_m(\theta_e)$ and the alternating-current voltage $V_m(\theta_e)$ that the inverter 11 outputs is small. In the motor winding, as a result, the alternating-current voltage $V_m(\theta_e)$ being supplied is small, so that a rate of current amplification, that is to say, the rate of current change is low. At the point $\theta_2$ where the induced voltage $e_m(\theta_e)$ is low, in contrast, the potential difference between the induced voltage $e_m(\theta_e)$ and the alternating-current voltage $V_m(\theta_e)$ that the inverter 11 outputs is large. In the motor winding, as a result, the alternating-current voltage $V_m(\theta_e)$ being supplied is large, so that the rate of current amplification, that is to say, the rate of current change is high.

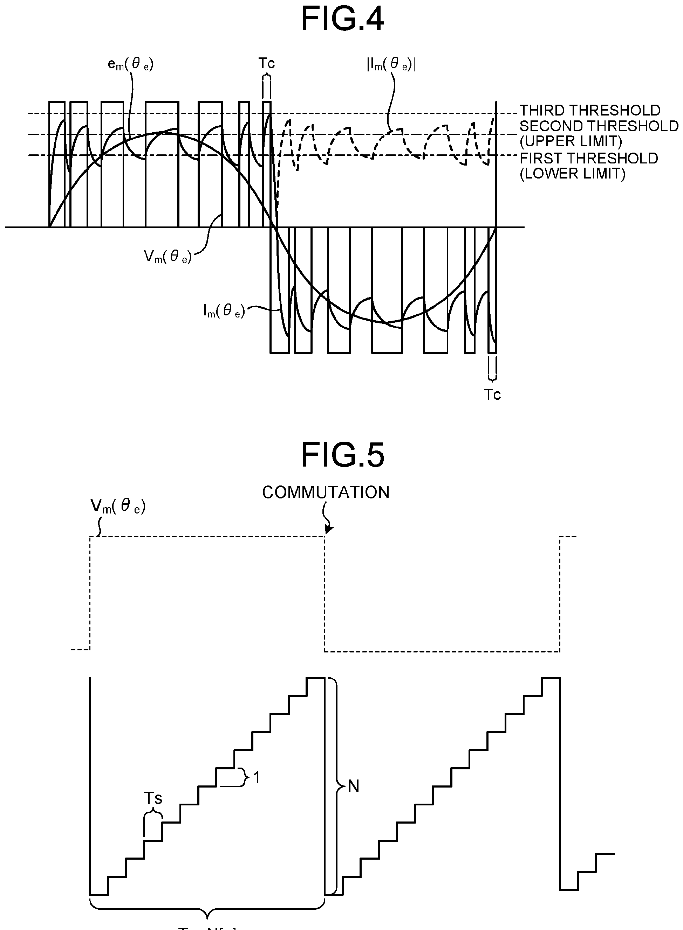

FIG. 4 illustrates an example of the alternating-current voltage $V_m(\theta_e)$ to be output from the inverter 11 of the motor driving apparatus 1 according to the first embodiment, an example of the induced voltage $e_m(\theta_e)$ in the single-phase motor 12, an example of the current $I_m(\theta_e)$ flowing through the single-phase motor 12, and examples of three thresholds for the current $I_m(\theta_e)$. The three thresholds are a first threshold, a second threshold, and a third threshold. In FIG. 4, a horizontal axis represents time. The same applies to the following similar figures.

The first threshold indicates a lower limit for the current $I_m(\theta_e)$ flowing through the single-phase motor 12. When the current $I_m(\theta_e)$ is less than the first threshold, the control unit 25 sets an application mode in which to output the alternating-current voltage $V_m(\theta_e)$ from the inverter 11 to the single-phase motor 12. Specifically, the control unit 25 outputs, to the driving signal generation unit 32, signals for operating the switching elements 51 to 54 of the inverter 11 so that the switching elements 51 and 54 come into conduction while the switching elements 53 and 52 come out of conduction, or so that the switching elements 51 and 54 of the inverter 11 come out of conduction while the switching elements 53 and 52 come into conduction. On the basis of the signals from the control unit 25, the driving signal generation unit 32 generates and outputs the driving signals for driving the switching elements 51 to 54. In this way, the motor driving apparatus 1 outputs the alternating-current voltage $V_m(\theta_e)$ to the single-phase motor 12, and carries the current $I_m(\theta_e)$ through the single-phase motor 12.

The second threshold indicates an upper limit for the current $I_m(\theta_e)$ flowing through the single-phase motor 12. When the current $I_m(\theta_e)$ flowing through the single-phase motor 12 reaches the second threshold or more with the alternating-current voltage $V_m(\theta_e)$ being output from the inverter 11 to the single-phase motor 12, the control unit 25 sets a halt mode in which to halt the output of the alternating-current voltage $V_m(\theta_e)$ from the inverter 11 to the single-phase motor 12. Specifically, the control unit 25 outputs, to the driving signal generation unit 32, the signals for operating the switching elements 51 to 54 of the inverter 11 so that all the switching elements 51 to 54 come out of conduction, so that the switching elements 51 and 53 come into conduction while the switching elements 52 and 54 come out of conduction, or so that the switching elements 51 and 53 come out of conduction while the switching elements 52 and 54 come into conduction. On the basis of the signals from the control unit 25, the driving signal generation unit 32 generates and outputs the driving signals for driving the switching elements 51 to 54. In this way, the motor driving apparatus 1 halts the output of the alternating-current voltage $V_m(\theta_e)$ to the single-phase motor 12, and halts the supply of the current $I_m(\theta_e)$ to the single-phase motor 12. The motor winding of the single-phase motor 12 is not supplied with the alternating-current voltage $V_m(\theta_e)$, and the current flowing through the single-phase motor 12 decreases.

When all the switching elements 51 to 54 are out of conduction, the current having flowed through the motor winding still keeps flowing due to the inductance component of the motor winding. This results in a regenerative mode in which the current flows through the freewheel diode connected in parallel with the lower switching element 52 or 54, the motor winding, and the freewheel diode connected in parallel with the upper switching element 51 or 53 toward the power line and is recovered by the power supply 10. The current in the regenerative mode flows through the pair of the switching elements 51 and 54 or the pair of the switching elements 52 and 53. When the control unit 25 brings one of the pair of switching elements from the nonconduction state to the conduction state, the current flows not through the freewheel diode, but through a switching component, of that switching element in the conduction state. Consequently, losses caused by the freewheel diodes can be decreased. Such a method is limited to the switching element such as the MOSFET that allows the current to flow backward in a semiconductor.

When the switching elements 51 and 53 are in conduction while the switching elements 52 and 54 are out of conduction, the current having flowed through the motor winding still keeps flowing due to the inductance component of the motor winding, which results in a freewheel mode that provides a loop of current through the motor winding and the switching elements 51 and 53. In this case, even when the switching element allowing the current to flow in a direction opposite to a forward direction is brought out of conduction, such a switching element allows the current to flow through the freewheel diode. The switching element, which allows the backward flow, achieves fewer losses by preventing current from passing through the freewheel diode. For a switching element that cannot make the backward flow possible, in contrast, this switching element needs to be brought out of conduction in order to allow the current to flow through the freewheel diode.

When the switching elements 51 and 53 are out of conduction while the switching elements 52 and 54 are in conduction, the current having flowed through the motor winding still keeps flowing due to the inductance component of the motor winding, which results in a freewheel mode that provides a loop of current through the motor winding and the switching elements 52 and 54. In this case, even when the switching element allowing the current to flow in a direction opposite to a forward direction is brought out of conduction, such a switching element allows the current to flow through the freewheel diode. The switching element, which allows the backward flow, achieves fewer losses by preventing current from passing through the freewheel diode. For a switching element that cannot make the backward flow possible, in contrast, this switching element needs to be brought out of conduction in order to allow the current to flow through the freewheel diode.

The above methods of operating the switching elements are examples. Each switching element may be brought into or out of conduction in any other manner to prevent supply of the alternating-current voltage $V_m(\theta_e)$ to the single-phase motor 12, i.e., the motor winding.

Since the motor winding is not supplied with the alternating-current voltage $V_m(\theta_e)$ both in the regenerative mode and in the freewheel mode, the current flowing through the motor winding tends to decrease. This results in the current falling below the second threshold shortly even after exceeding the second threshold.

Where the induced voltage $e_m(\theta_e)$ is low, the rate of amplification of the current $I_m(\theta_e)$ is high. Where the induced voltage $e_m(\theta_e)$ is high, the rate of amplification of the current $I_m(\theta_e)$ is low. It is therefore obvious that a time during which the alternating-current voltage $V_m(\theta_e)$ is supplied to the single-phase motor 12 and a time during which the alternating-current voltage $V_m(\theta_e)$ is not supplied to the single-phase motor 12 are variable depending on the phase of the induced voltage $e_m(\theta_e)$. Assume that one period starts with outputting the alternating-current voltage $V_m(\theta_e)$ to the single-phase motor 12 from the inverter 11, includes halting the output of the alternating-current voltage $V_m(\theta_e)$ and ends with outputting the alternating-current voltage $V_m(\theta_e)$ again. A length of this one period varies depending on the phase of the induced voltage $e_m(\theta_e)$. For this reason, the one period period of the alternating-current voltage $V_m(\theta_e)$ to be output from the inverter 11, that is to say, a switching frequency is not uniform. In typical driving by an inverter, a pulse width modulation (PWM) waveform is output at a uniform switching frequency, so that the switching frequency band provides a larger noise peak. In the present embodiment, however, the switching frequency at which the alternating-current voltage $V_m(\theta_e)$ is output from the inverter 11 is not fixed, so that noise effect due to the switching of the switching elements 51 to 54 of the inverter 11 is distributed over a wide band.

In order to reverse polarity of the output voltage of the inverter 11, that is to say, the alternating-current voltage $V_m(\theta_e)$, the control unit 25 needs to detect zero crossings of the induced voltage $e_m(\theta_e)$. As the induced voltage $e_m(\theta_e)$ approaches the zero crossing, the value of the induced voltage $e_m(\theta_e)$ decreases, so that the rate of amplification of the current $I_m(\theta_e)$ increases. In cases where the control unit 25 compares the current $I_m(\theta_e)$ with the thresholds in each of control periods Tc, the current $I_m(\theta_e)$ goes beyond the second threshold and reaches the third threshold in the control period Tc near the zero crossing of the induced voltage $e_m(\theta_e)$. At this time, the control unit 25 determines that the induced voltage $e_m(\theta_e)$ is near the zero crossing, and reverses the polarity of the alternating-current voltage $V_m(\theta_e)$ that the inverter 11 outputs.

For increased responsiveness of the comparison between the current $I_m(\theta_e)$ and the thresholds, the control period Tc needs to be short. If the control period Tc is short, the control unit 25 halts the output from the inverter 11 when the current $I_m(\theta_e)$ reaches the second threshold before reaching the third threshold, and thus cannot detect the zero crossing of the induced voltage $e_m(\theta_e)$. To address this, the control unit 25 extracts, from from the control period Tc near the zero crossing of the induced voltage $e_m(\theta_e)$, a period that allows comparison between the current $I_m(\theta_e)$ and the thresholds. In this way, the control unit 25 is capable of securing a time when the current $I_m(\theta_e)$ reaches the third threshold. Since an appropriate period to extract is different depending on a constant of the single-phase motor 12 to be controlled, the appropriate period needs to be preexamined through testing. The preexamination of the appropriate period is done, for example, by a person who designs an apparatus that includes the motor driving apparatus 1 and the single-phase motor 12.

When the value of the current $I_m(\theta_e)$ is negative, the control unit 25 determines an absolute value of the current value. In this way, the control unit 25 can make comparisons with the first through third thresholds in the same manner as in the case of the positive value of the current $I_m(\theta_e)$. When the absolute value of the value of the current $I_m(\theta_e)$ is less than the first threshold in each control period Tc, as described above, the control unit 25 causes the output of the alternating-current voltage $V_m(\theta_e)$ from the inverter 11 to the single-phase motor 12. When the absolute value of the value of the current $I_m(\theta_e)$ is equal to or more than the second threshold and less than the third threshold in each control period Tc, the control unit 25 halts the output of the alternating-current voltage $V_m(\theta_e)$ from the inverter 11 to the single-phase motor 12. When the absolute value of the value of the current $I_m(\theta_e)$ is equal to or more than the third threshold in each control period Tc, the control unit 25 reverses the polarity of the alternating-current voltage $V_m(\theta_e)$ that the inverter

11 outputs to the single-phase motor 12.

The induced voltage $e_m(\theta_e)$ is still near the zero crossing immediately after the polarity reversal, and thus the rate of amplification of the current $I_m(\theta_e)$ is still high. This means that the output of the alternating-current voltage $V_m(\theta_e)$ having the polarity reversed to the single-phase motor 12 could cause the control unit 25 to determine that the third threshold has been reached immediately. In view of this, immediately after the polarity reversal, the control unit 25 does not reverse the polarity even if the third threshold is reached, but brings the output of the inverter 11 to the regenerative mode or the freewheel mode as in the case where the second threshold is exceeded. In other words, the control unit 25 makes no determination using the third threshold for a prescribed period since reversing the polarity of the alternating-current voltage $V_m(\theta_e)$.

Since the induced voltage $e_m(\theta_e)=\omega_e\times\varphi_f\times\sin\theta_e$, and $V_m(\theta_e)$ is the alternating-current voltage, a right-hand side of Formula (5) showing the change in the current $I_m(\theta_e)$ with respect to time demonstrates that the rate of change in the current $I_m(\theta_e)$ varies depending on the electrical angular velocity $\omega_e$ and the alternating-current voltage $V_m(\theta_e)$ that is supplied to the single-phase motor 12. Thus, the first through third thresholds for the current $I_m(\theta_e)$ need to be varied depending on the electrical angular velocity $\omega_e$ and the alternating-current voltage $V_m(\theta_e)$ that is supplied to the motor winding.

FIG. 5 illustrates the alternating-current voltage $V_m(\theta_e)$ that is supplied by the inverter 11 of the motor driving apparatus 1 according to the first embodiment, and count-ups performed inside the processor 33 of the control unit 25. The processor 33 counts up a count value at equal intervals Ts. The processor 33 resets the count value at the timing at which the alternating-current voltage $V_m(\theta_e)$ that the inverter 11 outputs is reversed, that is to say, commutated. In resetting, the processor 33 holds a count value as N and multiplies N by Ts to thereby gain a time taken until the commutation takes place. For the single-phase motor 12 having the four-pole rotor 12a, for example, the processor 33 effects four commutations to achieve one rotation of the single-phase motor 12. The processor 33 is capable of obtaining the rotational speed per minute rpm by calculating $60/(Ts\times N\times4)$.

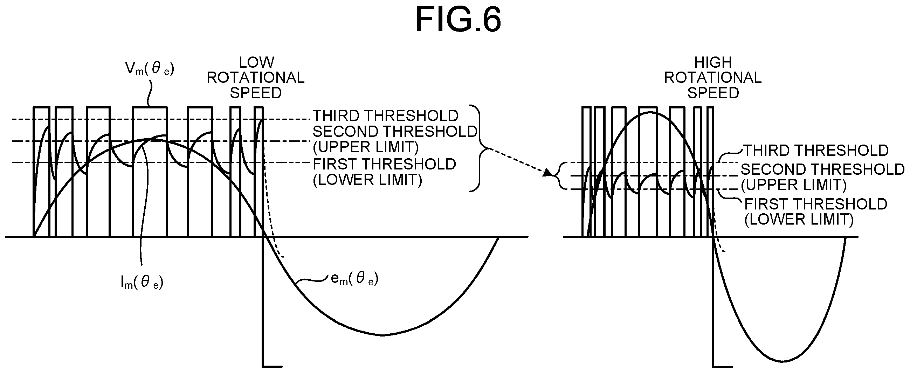

The control unit 25 is capable of varying the first through third thresholds in accordance with the calculated rotational speed. FIG. 6 illustrates the thresholds in the motor driving apparatus 1 according to the first embodiment that vary depending on the rotational speed of the single-phase motor 12. As illustrated in FIG. 6, a change in the rotational speed of the single-phase motor 12 causes the induced voltage $e_m(\theta_e)$ resulting from the rotational speed to change, so that the current $I_m(\theta_e)$ flowing through the single-phase motor 12 also changes. If the first through third thresholds are constants, values of the current $I_m(\theta_e)$ do not reach the third threshold, making it difficult for the control unit 25 to detect the induced voltage $e_m(\theta_e)$ near the zero crossing. To address this, the first through third thresholds that enable detection of the zero crossing of the induced voltage $e_m(\theta_e)$ are preexamined at each rotational speed. As illustrated in FIG. 6, when the rotational speed becomes high, the control unit 25 makes the first through third thresholds lower with lower intervals among the first through third thresholds than when the rotational speed is low.

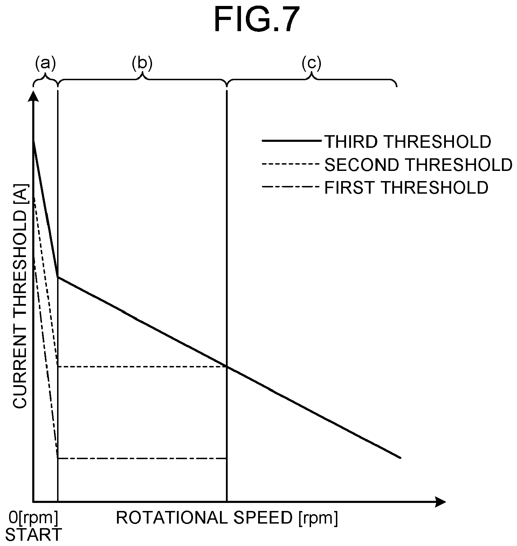

FIG. 7 illustrates examples of the first, second, and third thresholds to be used by the control unit 25 of the motor driving apparatus 1 according to the first embodiment that are based on the rotational speed of the single-phase motor 12. A graph illustrated in FIG. 7 shows that the first through third thresholds vary depending on the rotational speed of the single-phase motor 12. In FIG. 7, range (a) represents startup of the single-phase motor 12. The current value necessary for the startup varies from motor to motor. For example, a motor that structurally increases in cogging torque needs a large current at the startup to get rid of the cogging torque, so that the thresholds are set higher. The example illustrated by FIG. 6 points to range (a) of FIG. 7.

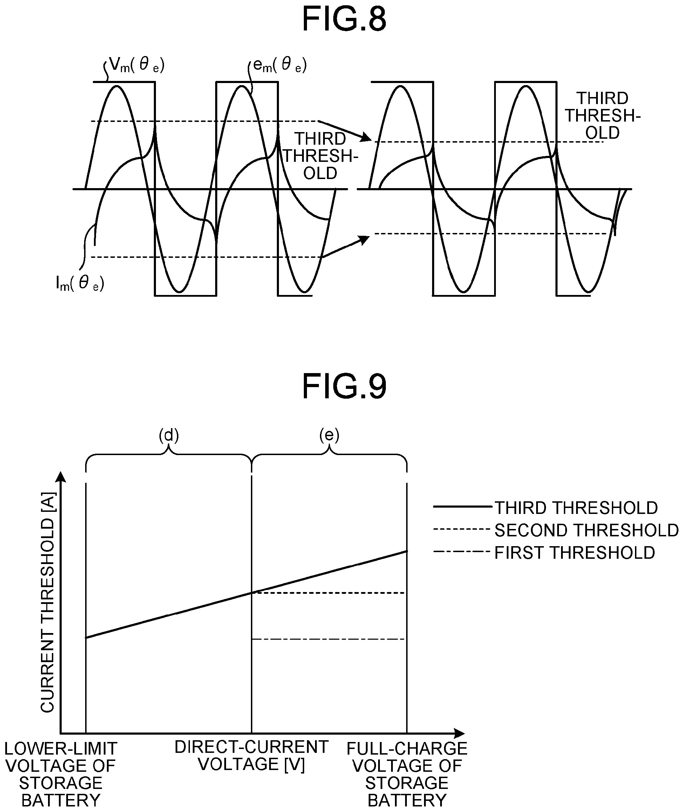

The electrical angular velocity $\omega_e$ increases as the rotational speed increases, thus increasing the induced voltage $e_m(\theta_e)$ as can be seen from Formula (1) for the induced voltage $e_m(\theta_e)$. As the induced voltage $e_m(\theta_e)$ increases, the rate of current amplification or the rate of current change decreases, as is obvious from Formula (5). Consequently, when the induced voltage $e_m(\theta_e)$ approaches the zero crossing with the current $I_m(\theta_e)$ remaining at a low level without growing, the current $I_m(\theta_e)$ surges and results in a spike as illustrated in FIG. 8. FIG. 8 illustrates the alternating-current voltage $V_m(\theta_e)$ that is supplied from the inverter 11 of the motor driving apparatus 1 according to the first embodiment, the induced voltage $e_m(\theta_e)$ in the single-phase motor 12, the current $I_m(\theta_e)$ flowing through the single-phase motor 12, and one of the thresholds for the current $I_m(\theta_e)$. The above-mentioned spike includes many harmonics. In range (b) of FIG. 7 where the threshold and a power factor decrease, thus, the polarity is reversed in the middle of growth of the current $I_m(\theta_e)$ with increase of the induced voltage $e_m(\theta_e)$ before the current $I_m(\theta_e)$ reaches the third threshold. For this reason, the third threshold needs to be lowered as the rotational speed increases.

When the rotational speed of the single-phase motor 12 reaches a certain level, the control unit 25 brings the third threshold into agreement with the second threshold. With the third threshold below the second threshold, the control unit 25 reverses the polarity of the alternating-current voltage $V_m(\theta_e)$ that the inverter 11 outputs each time the current $I_m(\theta_e)$ reaches the third threshold. As illustrated in FIG. 8, the control unit 25 does not need to switch the switching elements 51 to 54 of the inverter 11 multiple times at each polarity. In range (c) of FIG. 7, that is to say, during high-speed rotation of the single-phase motor 12, the control unit 25 does not require the first threshold and the second threshold. Consequently, the motor driving apparatus 1 has fewer switching losses due to the switching elements 51 to 54 of the inverter 11 and thus is capable of highly efficient motor driving.

In this way, the control unit 25 varies the levels of the first through third thresholds in accordance with the rotational speed of the single-phase motor 12. A table of the first through third thresholds corresponding to the rotational speeds as illustrated in FIG. 7 is held in advance by the control unit 25 as a result of calculations from actual measurements. The table may be created, for example, by the person who designs the apparatus that includes the motor driving apparatus 1 and the single-phase motor 12. Alternatively, the control unit 25 may derive a formula that determines the first through third thresholds corresponding to the rotational speed and may learn and optimize a coefficient of a linear expression that accords with a rotational state of the single-phase motor 12.

The control unit 25 may variably control the first through third thresholds on the basis of the direct-current voltage $V_{dc}$ that is supplied from the power supply 10 to the inverter 11, instead of the rotational speed. For example, if the power supply 10 that supplies the inverter 11 with the direct-current voltage $V_{dc}$ is a battery, the direct-current voltage $V_{dc}$ decreases with time. As the direct-current voltage $V_{dc}$ decreases, the current $I_m(\theta_e)$ changes less. If the first through third thresholds are constants in the case of the battery, the current $I_m(\theta_e)$ does not reach the third threshold, making it difficult for the control unit 25 to detect the induced voltage $e_m(\theta_e)$ near the zero crossing. To address this, the the control unit 25 holds, in the memory 34, the preexamined first through third thresholds in the form of a table that enable detection of the zero crossings of the induced voltage $e_m(\theta_e)$ at supply voltage values ranging from a lower-limit voltage to a full-charge voltage of the battery. FIG. 9 illustrates examples of the first, second, and third thresholds to be used by the control unit 25 of the motor driving apparatus 1 according to the first embodiment that are based on the direct-current voltage $V_{dc}$. The control unit 25 may vary the thresholds by having the processor 33 calculate the first through third thresholds appropriate to the direct-current voltage $V_{dc}$ of the power supply 10. The table may be created, for example, by the person who designs the apparatus that includes the motor driving apparatus 1 and the single-phase motor 12.

When the direct-current voltage $V_{dc}$ of the power supply 10 falls below a certain level at a certain rotational speed, the third threshold comes into agreement with the second threshold. The decreasing direct-current voltage $V_{dc}$ of the power supply 10 leads to a decreasing difference between the alternating-current voltage $V_m(\theta_e)$ that the inverter 11 outputs and the induced voltage $e_m(\theta_e)$ in the single-phase motor 12. As in the FIG. 7 case of the rotational speed that varies, the control unit 25 reverses the polarity of the alternating-current voltage $V_m(\theta_e)$ that the inverter 11 outputs each time the current $I_m(\theta_e)$ reaches the third threshold with the third threshold below the second threshold. As illustrated in FIG. 8, the control unit 25 does not need to switch the switching elements 51 to 54 of the inverter 11 multiple times at each polarity. In range (d) of FIG. 9, that is to say, when the direct-current voltage $V_{dc}$ is lower, the control unit 25 does not require the first threshold and the second threshold. On the other hand, in range (e) of FIG. 9, that is to say, when the direct-current voltage $V_{dc}$ is higher, the control unit 25 needs to raise the third threshold in accordance with increase of the direct-current voltage $V_{dc}$. As a result, the third threshold is equal to or more than the second threshold, and the first and second thresholds are required. In this way, the control unit 25 varies the levels of the first through third thresholds in accordance with the level of the direct-current voltage $V_{dc}$.

The method of varying the thresholds in accordance with the rotational speed of the single-phase motor 12 or the direct-current voltage $V_{dc}$ of the power supply 10 that is supplied to the inverter 11 is an example. The control unit 25 may vary the thresholds according to a motor type and characteristics of the inverter 11.

As described above, the control unit 25 changes the alternating-current voltage $V_m(\theta_e)$ by the mode switching based on the physical quantities, which represent the operation state of the single-phase motor 12, and the thresholds. An output waveform of the alternating-current voltage $V_m(\theta_e)$ from the inverter 11 is a shape of a rectangular wave, and an averaged alternating-current voltage $V_m(\theta_e)$ at each polarity assumes a trapezoidal waveform.

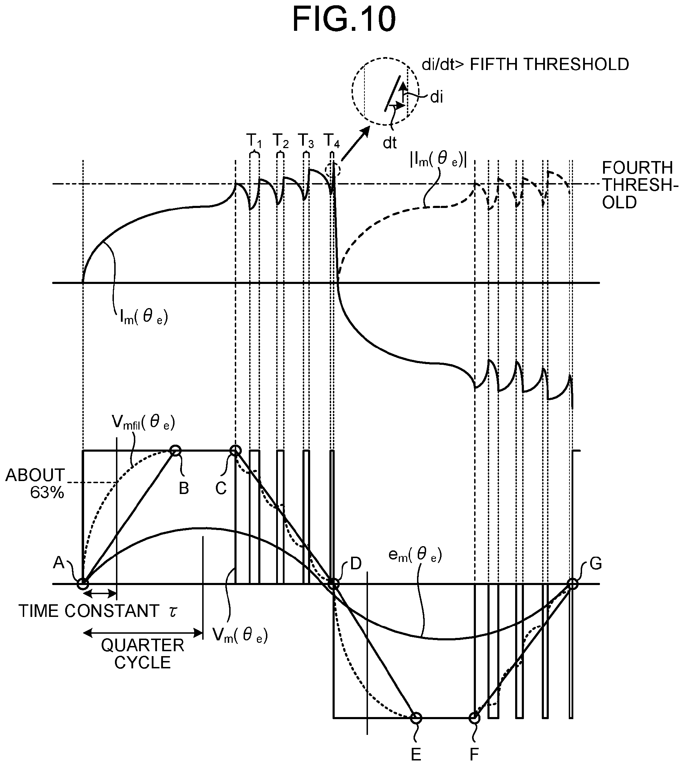

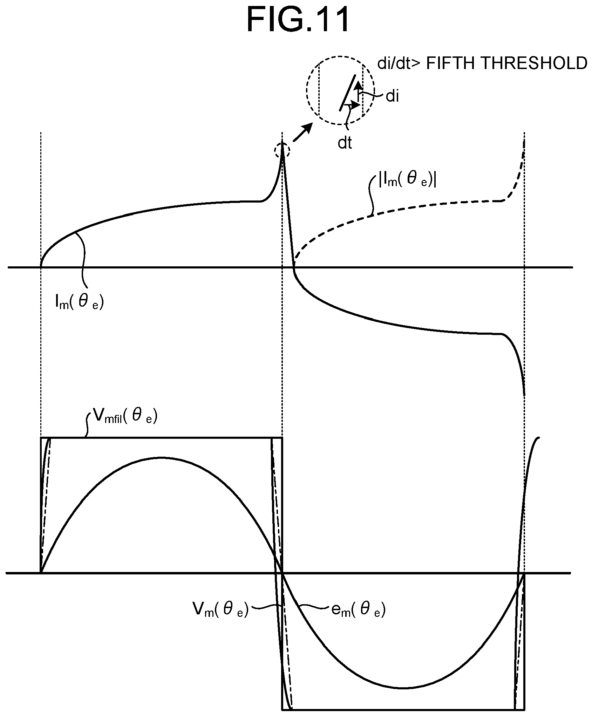

FIG. 10 illustrates a first example of average alternating-current voltage $V_{mfil}(\theta_e)$ as a result of averaging performed on the alternating-current voltage $V_m(\theta_e)$ that the inverter 11 of the motor driving apparatus 1 according to the first embodiment outputs to the single-phase motor 12. When the current $I_m(\theta_e)$ reaches a fourth threshold or more, the control unit 25 stepwise decreases duration of the output of the alternating-current voltage $V_m(\theta_e)$ from the inverter 11 to the single-phase motor 12. In other words, a duration $T_1$>a duration $T_2$>a duration $T_3$>a duration $T_4$. The control unit 25 performs filtering on the alternating-current voltage $V_m(\theta_e)$ to be output from the inverter 11 and performs control that causes the filtered and blunted alternating-current voltage $V_{mfil}(\theta_e)$ to assume a trapezoidal waveform represented by time and voltage. As the induced voltage $e_m(\theta_e)$ approaches the zero crossing, the current $I_m(\theta_e)$ increases significantly, meaning that an absolute value of the rate of change di/dt in the current $I_m(\theta_e)$ increases. In FIG. 10 and FIG. 11 (described later), di/dt is the same as $dI_m(\theta_e)/dt$ mentioned earlier. The control unit 25 reverses the polarity of the alternating-current voltage $V_m(\theta_e)$ to be output from the inverter 11 to the single-phase motor 12 when the absolute value of the rate of change di/dt in the current $I_m(\theta_e)$ is equal to or more than a fifth threshold, that is to say, around the duration $T_4$ in FIG. 10.

As described above, when the absolute value of the value of the current $I_m(\theta_e)$ is equal to or more than the fourth threshold, the control unit 25 alternates between a first process of halting the alternating-current voltage $V_m(\theta_e)$ from the inverter 11 to the single-phase motor 12 in a first period and a second process of outputting the alternating-current voltage $V_m(\theta_e)$ from the inverter 11 to the single-phase motor 12 in a second period. While alternating the first process and the second process, the control unit 25 shortens the second period stepwise, and when the absolute value of the rate of change di/dt in the current $I_m(\theta_e)$ is equal to or more than the fifth threshold in the second period, the control unit 25 reverses the polarity of the alternating-current voltage $V_m(\theta_e)$ to be output from the inverter 11 to the single-phase motor 12. Besides the controls using the three thresholds, the control unit 25 is also capable of performing the control that causes the alternating-current voltage $V_{mfil}(8_e)$ to assume the trapezoidal waveform by gradually decreasing the duration of the output of the alternating-current voltage $V_m(\theta_e)$ from the inverter 11 to the single-phase motor 12, that is to say, by varying a duty factor of the PWM waveform.

An output waveform of the alternating-current voltage $V_m(\theta_e)$ is similarly a shape of a rectangular wave during high-speed rotation or when the direct-current voltage $V_{dc}$ of the power supply 10 decreases, and an alternating-current voltage $V_{mfil}(8_e)$, which is an averaged alternating-current voltage $V_m(\theta_e)$ at each polarity, assumes a trapezoidal waveform. FIG. 11 illustrates a second example of the average alternating-current voltage $V_{mfil}(8_e)$ as a result of averaging performed on the alternating-current voltage $V_m(\theta_e)$ that the inverter 11 of the motor driving apparatus 1 according to the first embodiment outputs to the single-phase motor 12. Also in this case, the control unit 25 reverses the polarity of the alternating-current voltage $V_m(\theta_e)$ to be output from the inverter 11 to the single-phase motor 12 when the absolute value of the rate of change di/dt in the current $I_m(\theta_e)$ is equal to or more than the fifth threshold.

When the alternating-current voltage $V_m(\theta_e)$ is in the form of the trapezoidal or rectangular wave, the inverter 11 has decreased switchings of the switching elements 51 to 54 and thus has fewer switching losses, so that the motor driving apparatus 1 is capable of driving the single-phase motor 12 with high efficiency.

In cases where the alternating-current voltage $V_{mfil}(8_e)$ of trapezoidal waveform is output from the inverter 11, the switching elements 51 to 54 of the inverter 11 are switched near the zero crossing of the induced voltage $e_m(\theta_e)$. Since the rate of amplification of $I_m(\theta_e)$ is greater near the zero crossing, current distortion easily occurs. By switching the switching elements 51 to 54 near this zero crossing, the inverter 11 holds intense increase of the current $I_m(\theta_e)$ down and reduces the current distortion. This is effective in motor driving control that causes rotation of a load with vanes, such as a fan because the current distortion imparts vibration to the rotation of the single-phase motor 12. Installing such a single-phase motor 12 in an apparatus such as a vacuum cleaner or a dryer enables the apparatus to have reduced noise.

The trapezoidal waveform of the alternating-current voltage $V_{mfil}(8_e)$ that produces these effects may have bilateral symmetry, and even with bilateral asymmetry, the same effects are obtainable. An practical shape of the alternating-current voltage $V_{mfil}(8_e)$ is denoted by a dotted line in a lower diagram of FIG. 10. A time constant $\tau$ of a filter used in the filtering is shorter than a quarter period of the alternating-current voltage $V_m(\theta_e)$. The time constant $\tau$ is a time required for the alternating-current voltage $V_{mfil}(8_e)$ to reach 63% of the alternating-current voltage $V_m(\theta_e)$ since the polarity of the alternating-current voltage $V_m(\theta_e)$ has been switched. Ideally, the alternating-current voltage $V_{mfil}(\theta_e)$ to be output from the filter becomes saturated during the quarter cycle of the alternating-current voltage $V_m(\theta_e)$. Ideally, the alternating-current voltage $V_{mfil}(\theta_e)$ to be output from the filter similarly becomes saturated during a three-quarter cycle of the alternating-current voltage $V_m(\theta_e)$.

The time constant $\tau$ is thus preferably designed to be, for example, less than one-fifth times the quarter period of the alternating-current voltage $V_m(\theta_e)$. In other words, the condition "$5 \times \tau <$ the quarter cycle of the alternating-current voltage $V_m(\theta_e)$" should be satisfied. In In the lower diagram of FIG. 10, a saturation period of the filtered alternating-current voltage $V_{mfil}(\theta_e)$ is a period indicated by a segment BC between a point B and a point C in FIG. 10. A straight line drawn from the point B to a point A that comes before the point B in time and where the polarity of the alternating-current voltage $V_m(\theta_e)$ has been switched is referred to as a segment AB. A straight line drawn from the point C to a point D that comes after the point C in time and where the polarity of the alternating-current voltage $V_m(\theta_e)$ is switched is referred to as a segment CD. The polarity of the alternating-current voltage $V_m(\theta_e)$ is switched in a period defined by a segment AD between the points A and D. Thus, the trapezoidal waveform of the alternating-current voltage $V_{mfil}(\theta_e)$ is a shape defined by those four segments including the segment BC as an upper base, the segment AD as a lower base and the segments AB and CD. The same applies to the case where the polarity of the alternating-current voltage $V_m(\theta_e)$ is negative, that is to say, a trapezoidal wave provided by points D, E, F, and G. In other words, the control unit 25 performs the control that causes the shape formed by the four segments obtained from the practical shape of the alternating-current voltage $V_{mfil}(8_e)$ to define the trapezoidal wave. The control that the control unit 25 performs can be said to time the saturation of the alternating-current voltage $V_{mfil}(\theta_e)$, which has been filtered, that is to say, has been output from the filter, to coincide with the quarter period and the three-quarter period, of the alternating-current voltage $V_m(\theta_e)$.

After a Fourier expansion, a rectangular-wave signal is expressed by Formula (7).

[Formula 5]

$$\frac{4}{\pi}\left\{ \sin x + \frac{1}{3}\sin 3x + \frac{1}{5}\sin 5x + \frac{1}{7}\sin 7x + \cdots \right\} \qquad \cdots \; (7)$$

Since a fundamental harmonic sinx is multiplied by 4/n, a voltage utilization rate of the single-phase motor 12 increases when the alternating-current voltage $V_m(\theta_e)$ of rectangular waveform is output. For the same output, the current can be reduced by as much as the increase in the voltage utilization rate by increasing coil windings of the single-phase motor 12, thus enabling, for example, reduced copper loss in the single-phase motor 12 and reduced semiconductor heat loss of an inverter substrate. This is highly effective particularly in the case of, for example, a battery with a supply voltage of 48 V or less or a cell.

If the resistance component and the inductance component of the motor winding are already known in Formula (4), which expresses the motor circuit equation, the first term of the right-hand side is readily determined using the current detection unit 21. The second term is determined by calculating the rate of current amplification from a time Time required for the current to be amplified from the first threshold to the second threshold as shown in Formula (8) .

[Formula 6]

$$\frac{dI_{m(\theta_t)}}{dt} = \frac{\text{Second threshold} - \text{First threshold}}{\text{Time}} \qquad \cdots \; (8)$$

Since all the values other than the induced voltage $e_m(\theta_e)$ in the circuit equation expressed by Formula (4) are determined, use of these values enables calculation of the induced voltage $e_m(\theta_e)$.

In addition to the above-mentioned method, there are various methods such as a method of calculating the induced voltage $e_m(\theta_e)$ from flux linkage and the rotational speed, and a method of preparing a separate circuit for detecting the induced voltage $e_m(\theta_e)$. Any of the methods enables calculation or detection of the induced voltage $e_m(\theta_e)$ and needs not be particularly limiting.

As for those parameters such as the motor winding's resistance and inductance to be used in the circuit equation for the single-phase motor 12, there are a method of holding those parameters as design values beforehand, and a method of determining those parameters by parameter identification during the startup of the single-phase motor 12, among others.

The control unit 25 is also capable of controlling the single-phase motor 12 by reversing the polarity of the alternating-current voltage $V_m(\theta_e)$ that the inverter 11 outputs, in accordance with a specified threshold such as the calculated zero crossing of the induced voltage $e_m(\theta_e)$. The physical quantities detected by by the current detection unit 21 and the voltage detection unit 20 represent the rotational position of the rotor 12a of the single-phase motor 12. The control unit 25 is capable of estimating the rotational position of the rotor 12a in the single-phase motor 12, using the induced voltage $e_m(\theta_e)$ in the single-phase motor 12 based on the physical quantities. The control unit 25 controls, in accordance with the induced voltage $e_m(\theta_e)$, that is to say, the estimated position of the rotor 12a, the alternating-current voltage to be output from the inverter 11 to the single-phase motor 12. The control unit 25 is capable of controlling the alternating-current voltage to be output from the inverter 11 to the single-phase motor 12 as long as the control unit 25 is given physical quantities detected by the current detection unit 21 and the voltage detection unit 20. In practice, thus, the control unit 25 either may or need not estimate the rotational position of the rotor 12a in the single-phase motor 12 from the physical quantities.

The control unit 25 may use either of the scheme under which the induced voltage $e_m(\theta_e)$ is calculated for controlling the alternating-current voltage, and the above described scheme under which the current value is compared with the plurality of thresholds for controlling the alternating-current voltage. The control unit 25 can increase control accuracy by using both of the schemes together or switching between the schemes in accordance with a rotational speed range or conditions for which each of the schemes are competent. In other words, the control unit 25 is capable of estimating the rotational position of the rotor 12a in the single-phase motor 12, using the induced voltage $e_m(\theta_e)$ in the single-phase motor 12 based on the physical quantities. The control unit 25 uses at least one of the control using the current value and the thresholds or the control using the induced voltage $e_m(\theta_e)$ to control the alternating-current voltage to be output from the inverter 11 to the single-phase motor 12.

The motor driving apparatus 1 according to the present embodiment can serve as a motor driving apparatus not using a position sensor. Consequently, it becomes possible to separate a body of the single-phase motor 12 from the substrate, thus enabling the substrate to be placed where heat of the motor driving apparatus 1 does not affect. Moreover, not only an increase in structural flexibility but also use in a water-related appliance is enabled. For example, installing the motor driving apparatus 1 in a vacuum cleaner enables suction of not only dust but also moisture.

Since a position sensor installation step is eliminated from a process of manufacturing the single-phase motor 12, the reduction in the manufacturing cost can be achieved, and the motor control can be performed disregarding the effect of variations due to the position sensor installation.

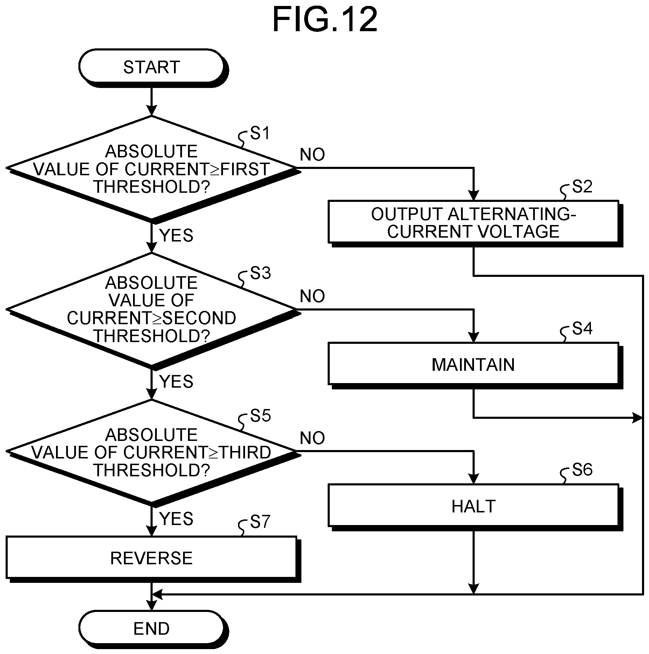

Using flowcharts, a description is provided of operations of the control unit 25 according to the present embodiment. FIG. 12 is a first flowchart illustrating the operation of the control unit 25 of the motor driving apparatus 1 according to the first embodiment. The FIG. 12 flowchart illustrates the FIG. 4 operation of the control unit 25. The control unit 25 determines whether or not the absolute value of the current $I_m(\theta_e)$, which is the physical quantity detected by the current detection unit 21, is equal to or more than the first threshold (step S1). If the absolute value of the current $I_m(\theta_e)$ is less than the first threshold (step S1: No), the control unit 25 causes the output of the alternating-current voltage $V_m(\theta_e)$ from the inverter 11 to the single-phase motor 12 (step S2). If the absolute value of the current $I_m(\theta_e)$ is equal to or more than the first threshold (step S1: Yes), the control unit 25 determines whether or not the current $I_m(\theta_e)$ is equal to or more than the second threshold (step S3). If the absolute value of the current $I_m(\theta_e)$ is less than the second threshold (step S3: No), the control unit 25 maintains the previously determined control state (step S4). If the absolute value of the current $I_m(\theta_e)$ is equal to or more than the second threshold (step S3: Yes), the control unit 25 determines whether or not the current $I_m(\theta_e)$ is equal to or more than the third threshold (step S5). If the absolute value of the current $I_m(\theta_e)$ is less than the third threshold (step S5: No), the control unit 25 halts the output of the alternating-current voltage $V_m(\theta_e)$ from the inverter 11 to the single-phase motor 12 (step S6). If the absolute value of the current $I_m(\theta_e)$ is equal to or more than the third threshold (step S5: Yes), the control unit 25 reverses the polarity of the alternating-current voltage $V_m(\theta_e)$ to be output from the inverter 11 to the single-phase motor 12 (step S7). The operation illustrated by the FIG. 12 flowchart is repeated in the control periods Tc by the control unit 25.

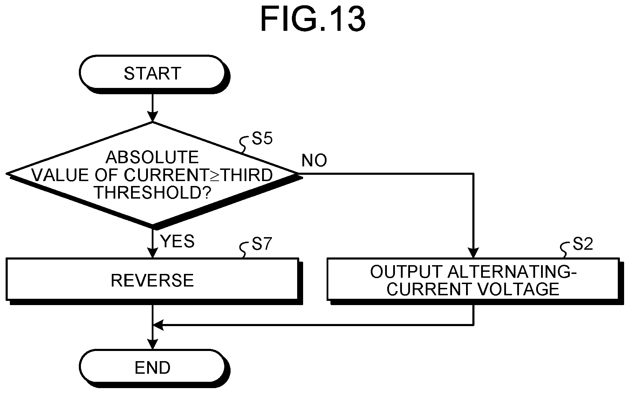

FIG. 13 is a second flowchart illustrating the operation of the control unit 25 of the motor driving apparatus 1 according to the first embodiment. The FIG. 13 flowchart illustrates the FIG. 8 operation of the control unit 25. If the absolute value of the current $I_m(\theta_e)$ is less than the third threshold (step S5: No), the control unit 25 causes the output of the alternating-current voltage $V_m(\theta_e)$ from the inverter 11 to the single-phase motor 12 (step S2). If the absolute value of the current $I_m(\theta_e)$ is equal to or more than the third threshold (step S5: Yes), the control unit 25 reverses the polarity of the alternating-current voltage $V_m(\theta_e)$ to be output from the inverter 11 to the single-phase motor 12 (step S7). The operation illustrated by the FIG. 13 flowchart is repeated in the control periods Tc by the control unit 25.

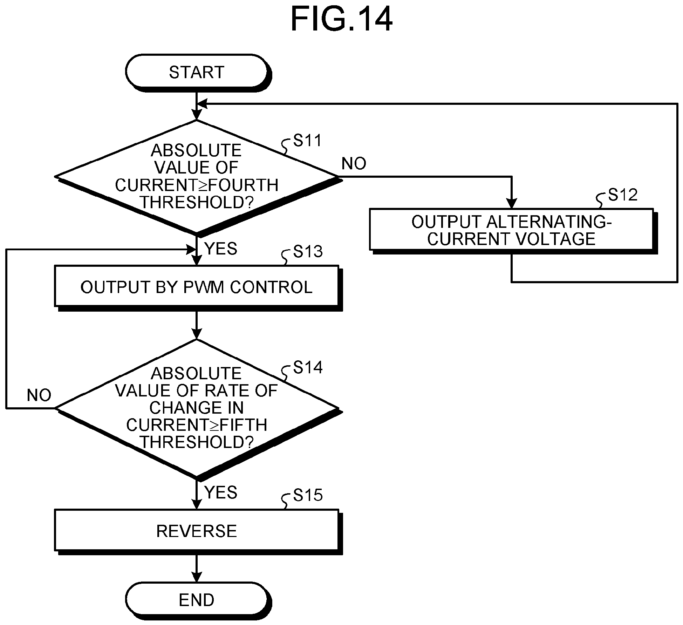

FIG. 14 is a third flowchart illustrating the operation of the control unit 25 of the motor driving apparatus 1 according to the first embodiment. The FIG. 14 flowchart illustrates the FIG. 10 operation of the control unit 25. The control unit 25 determines whether or not the absolute value of the current $I_m(\theta_e)$, which is the physical quantity detected by the current detection unit 21, is equal to or more than the fourth threshold (step S11). If the absolute value of the current $I_m(\theta_e)$ is less than the fourth threshold (step S11: No), the control unit 25 causes the output of the alternating-current voltage $V_m(\theta_e)$ from the inverter 11 to the single-phase motor 12 (step S12). If the absolute value of the current $I_m(\theta_e)$ is equal to or more than the fourth threshold (step S11: Yes), the control unit 25 decreases the duration of the output of the alternating-current voltage $V_m(\theta_e)$ from the inverter 11 stepwise by PWM control to the single-phase motor 12 (step S13). The control unit 25 determines whether or not the absolute value of the rate of change in the current $I_m(\theta_e)$ is equal to or more than the fifth threshold (step S14). If the absolute value of the rate of change in the current $I_m(\theta_e)$ is less than the fifth threshold (step S14: No), the control unit 25 sustains the step S13 operation. If the absolute value of the rate of change in the current $I_m(\theta_e)$ is equal to or more than the fifth threshold (step S14: Yes), the control unit 25 reverses the polarity of the alternating-current voltage $V_m(\theta_e)$ to be output from the inverter 11 to the single-phase motor 12 (step S15). The control unit 25 performs the operation illustrated by the FIG. 14 flowchart upon each reversal of the polarity of the alternating-current voltage $V_m(\theta_e)$ to be output from the inverter 11 to the single-phase motor 12.

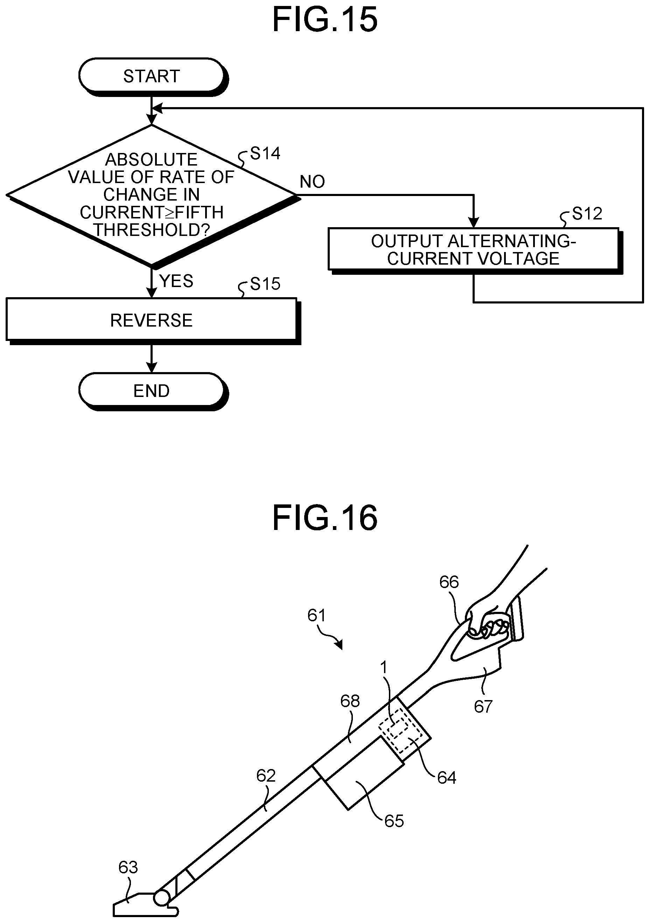

FIG. 15 is a fourth flowchart illustrating the operation of the control unit 25 of the motor driving apparatus 1 according to the first embodiment. The FIG. 15 flowchart illustrates the FIG. 11 operation of the control unit 25. If the absolute value of the rate of change in the current $I_m(\theta_e)$ is less than the fifth threshold (step S14: No), the control unit 25 causes the output of the alternating-current voltage $V_m(\theta_e)$ from the inverter 11 to the single-phase motor 12 (step S12). If the absolute value of the rate of change in the current $I_m(\theta_e)$ is equal to or more than the fifth threshold (step S14: Yes), the control unit 25 reverses the polarity of the alternating-current voltage $V_m(\theta_e)$ to be output from the inverter 11 to the single-phase motor 12 (step S15). The control unit 25 performs the operation illustrated by the FIG. 15 flowchart upon each reversal of the polarity of the alternating-current voltage $V_m(\theta_e)$ to be output to the single-phase motor 12 from the inverter 11.

The calculations shown in the present embodiment, the controls of the alternating-current voltage $V_m(\theta_e)$ that the inverter 11 outputs, and the rotational speed calculation illustrated in FIG. 5 are implementable by the processor 33 illustrated in FIG. 1. The processor 33 is a processing unit that performs various operations. The memory 34 stores, for example, programs to be read by the processor 33 and the first through third thresholds relative to the rotational speed. The memory 34 is used as a work area when the processor 33 performs the operations. The processor 33 may be what is referred to as, for example, a central processing unit (CPU), a microprocessor, a microcomputer, or a digital signal processor (DSP). In general, the memory 34 is a nonvolatile or volatile semiconductor memory such as a random-access memory (RAM), a flash memory, an erasable programmable ROM (EPROM), or an electrically EPROM (EEPROM) (registered trademark).

As described above, the control unit 25 of the motor driving apparatus 1 according to the present embodiment controls, in accordance with the physical quantities representing the operation state of the single-phase motor 12, the alternating-current voltage $V_m(\theta_e)$ to be output from the inverter 11 to the single-phase motor 12. In this way, the control unit 25 is capable of efficiently driving the single-phase motor 12 without using the position sensor. Moreover, the manufacturing cost is reduced compared to a conventional single-phase motor with a position sensor, and expanded use of the single-phase motor is enabled because of the increase in structural flexibility.

Second Embodiment.

In a second embodiment, a description is provided of cases where the motor driving apparatus 1 described in the first embodiment is applied to specific electrical apparatuses.

FIG. 16 illustrates a configuration example of a vacuum cleaner 61 according to the second embodiment that includes the motor driving apparatus 1. The vacuum cleaner 61 includes a battery 67 that serves as a direct current power supply, an electric blower 64 with the motor driving apparatus 1 that is driven by the single-phase motor 12 (not illustrated), a dust receptacle 65, a sensor 68, a suction body 63, an extension pipe 62, and an operating part 66. The battery 67 corresponds to the power supply 10 illustrated in FIG. 1. A user of the vacuum cleaner 61 holds the operating part 66 and operates the vacuum cleaner 61. The motor driving apparatus 1 of the vacuum cleaner 61 uses the battery 67 as the power supply to drive the electric blower 64. As the electric blower 64 is driven, the suction body 63 sucks up dust, which collects in the dust receptacle 65 through the extension pipe 62.

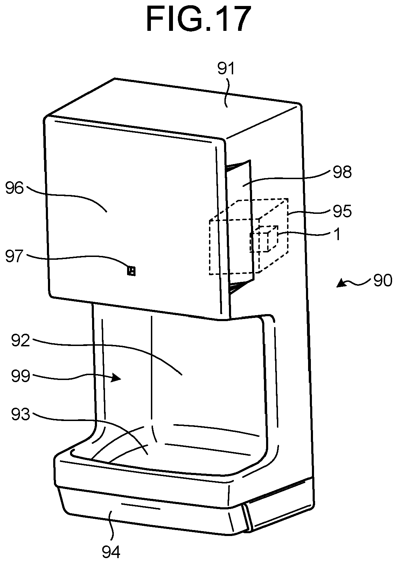

FIG. 17 illustrates a configuration example of a hand dryer 90 according to the second embodiment that includes the motor driving apparatus 1. The hand dryer 90 includes a casing 91, a hand detection sensor 92, a water receptacle 93, a drain receptacle 94, an electric blower 95 with the motor driving apparatus 1 that is driven by the single-phase motor 12 (not illustrated), a cover 96, a sensor 97, and an air-intake 98. The sensor 97 here is either a gyro sensor or a motion sensor. When a hand is inserted into a hand insertion part 99 above the water receptacle 93 of the hand dryer 90, water is blown by air sent from the electric blower 95, collects in the water receptacle 93, and is then stored in the drain receptacle 94.

As described above, the motor driving apparatus 1 is applicable, for example, to the vacuum cleaner 61 illustrated in FIG. 16 and the hand dryer 90 illustrated in FIG. 17; however, these are examples. The motor driving apparatus 1 is assumed to be used generally in electrical apparatuses mounted with motors. The electrical apparatuses mounted with the motors are, for example, apparatuses that include electric blowers, such as an incinerator, a grinder, a dryer, a dust collector, a printing machine, a cleaning machine, confectionery equipment, a tea manufacturing machine, a woodworking machine, a plastic extruder, a cardboard machine, a packaging machine, a hot air generator, object transportation equipment, a dust suction machine, a general ventilator, and office automation (OA) equipment.

The above configurations illustrated in the embodiments are illustrative of contents of the present invention, can be combined with other techniques that are publicly known, and can be partly omitted or changed without departing from the gist of the present invention.

Reference Signs List

1 motor driving apparatus; 10 power supply; 11 inverter; 12 single-phase motor; 12a rotor; 20 voltage detection unit; 21 current detection unit; 25 control unit; 30, 31 analog-to-digital converter; 32 driving signal generation unit; 33 processor; 34 memory; 51 to 54 switching element; 61 vacuum cleaner; 62 extension pipe; 63 suction body; 64, 95 electric blower; 65 dust receptacle; 66 operating part; 67 battery; 68 sensor; 90 hand dryer; 91 casing; 92 hand detection sensor; 93 water receptacle; 94 drain receptacle; 96 cover; 97 sensor; 98 air-intake; 99 hand insertion part.

**Claims**

1. A motor driving apparatus (1) for controlling driving of a single-phase motor (12), the single-phase motor rotating a rotor (12a), permanent magnets being disposed in the rotor, the motor driving apparatus comprising:

   an inverter (11) comprising a plurality of switching elements (51 to 54), the inverter converting, by using the switching elements, a direct-current voltage into an alternating-current voltage and outputting the alternating-current voltage to the single-phase motor;
   a detection unit (20;21) detecting a physical quantity representing an operation state of the single-phase motor;

and
a control unit (25) controlling, in accordance with the physical quantity, the alternating-current voltage from the inverter to be output to the single-phase motor, wherein
the detection unit detects a value of current flowing through the single-phase motor as the physical quantity,
**characterised in that**
the control unit causes output of the alternating-current voltage from the inverter to the single-phase motor when an absolute value of the value of the current is less than a first threshold, halts the output of the alternating-current voltage from the inverter to the single-phase motor when an absolute value of the value of the current is equal to or more than a second threshold and less than a third threshold, and reverses polarity of an alternating-current voltage that the inverter outputs to the single-phase motor when an absolute value of the value of the current is equal to or more than the third threshold.

2. The motor driving apparatus according to claim 1, wherein
the control unit (25) varies levels of the first threshold, the second threshold, and the third threshold in accordance with a rotational speed of the single-phase motor.

3. The motor driving apparatus according to claim 1, wherein
the control unit (25) varies levels of the first threshold, the second threshold, and the third threshold in accordance with a level of the direct-current voltage.

4. The motor driving apparatus according to any one of claims 1 to 3, wherein
the control unit (25) makes no determination using the third threshold for a prescribed period since reversing the polarity of the alternating-current voltage.

5. A motor driving apparatus (1), for controlling driving of a single-phase motor (12), the single-phase motor rotating a rotor (12a), permanent magnets being disposed in the rotor, the motor driving apparatus comprising:

an inverter (11) comprising a plurality of switching elements (51 to 54), the inverter converting, by using the switching elements, a direct-current voltage into an alternating-current voltage and outputting the alternating-current voltage to the single-phase motor;
a detection unit (20;21) detecting a physical quantity representing an operation state of the single-phase motor; and
a control unit (25) controlling, in accordance with the physical quantity, the alternating-current voltage from the inverter to be output to the single-phase motor,
wherein
the detection unit detects a value of current flowing through the single-phase motor as the physical quantity,
**characterised in that**
the control unit alternates between a first process of halting the alternating-current voltage from the inverter to the single-phase motor in a first period and a second process of outputting the alternating-current voltage to the single-phase motor from the inverter in a second period when an absolute value of the value of the current is equal to or more than a fourth threshold, shortens the second period stepwise during the alternation of the first and second processes, and reverses polarity of an alternating-current voltage that the inverter outputs to the single-phase motor when an absolute value of a rate of change in the value of the current is equal to or more than a fifth threshold in the second period.

6. The motor driving apparatus according to any one of claims 1 to 5, wherein
the control unit (25) controls, in accordance with an induced voltage in the single-phase motor based on the physical quantity, an alternating-current voltage to be output from the inverter to the single-phase motor.

7. The motor driving apparatus according to any one of claims 1 to 5, wherein
the control unit (25) uses at least one of the control that uses the value of the current and thresholds or control that uses an induced voltage in the single-phase motor based on the physical quantity to control an alternating-current voltage to be output from the inverter to the single-phase motor.

8. The motor driving apparatus according to any one of claims 1 to 7, wherein
the control unit (25) performs filtering on the alternating-current voltage to be output from the inverter and performs control that causes a filtered alternating-current voltage to assume a trapezoidal waveform represented by time and voltage.

9. The motor driving apparatus according to any one of claims 1 to 7, wherein
the control unit (25) performs filtering on the alternating-current voltage to be output from the inverter and performs control that times saturation of a filtered alternating-current voltage to coincide with a quarter cycle and a three-quarter cycle, of the alternating-current voltage.

10. The motor driving apparatus according to any one of claims 1 to 9, wherein at least one of the switching elements (51 to 54) is made using a wide bandgap semiconductor.

11. The motor driving apparatus according to claim 10, wherein the wide bandgap semiconductor is silicon carbide, gallium nitride, or diamond.

12. An electric blower (64) comprising the motor driving apparatus according to any one of claims 1 to 11.

13. A vacuum cleaner (61) comprising the electric blower according to claim 12.

14. A hand dryer (90) comprising the electric blower according to claim 12.


**Patentansprüche**

1. Motorantriebsvorrichtung (1) zum Steuern des Antriebs eines Einphasenmotors (12), wobei der Einphasenmotor einen Rotor (12a) dreht, wobei Permanentmagneten in dem Rotor angeordnet sind, wobei die Motorantriebsvorrichtung Folgendes umfasst:

einen Wechselrichter (11), umfassend eine Vielzahl von Schaltelementen (51 bis 54), wobei der Wechselrichter unter Verwendung der Schaltelemente Gleichspannung in Wechselspannung konvertiert und die Wechselspannung an den Einphasenmotor ausgibt;
eine Detektionseinheit (20; 21), die eine physikalische Größe detektiert, die einen Betriebszustand des Einphasenmotors angibt; und
eine Steuereinheit (25), die gemäß der physikalischen Größe die Wechselspannung von dem Wechselrichter, die an den Einphasenmotor auszugeben ist, steuert, wobei
die Detektionseinheit einen Stromwert, der durch den Einphasenmotor fließt, als die physikalische Größe detektiert, **dadurch gekennzeichnet, dass**:
die Steuereinheit die Ausgabe der Wechselspannung aus dem Wechselrichter an den Einphasenmotor bewirkt, wenn ein Absolutwert des Stromwerts kleiner ist als ein erster Schwellenwert, die Ausgabe der Wechselspannung aus dem Wechselrichter an den Einphasenmotor anhält, wenn ein Absolutwert des Stromwerts größer oder gleich einem zweiten Schwellenwert und kleiner als ein dritter Schwellenwert ist, und die Polarität einer Wechselspannung, die der Wechselrichter an den Einphasenmotor ausgibt, umkehrt, wenn ein Absolutwert des Stromwerts größer oder gleich dem dritten Schwellenwert ist.

2. Motorantriebsvorrichtung nach Anspruch 1, wobei
die Steuereinheit (25) die Höhe des ersten Schwellenwerts, des zweiten Schwellenwerts und des dritten Schwellenwerts gemäß einer Drehzahl des Einphasenmotors variiert.

3. Motorantriebsvorrichtung nach Anspruch 1, wobei
die Steuereinheit (25) die Höhe des ersten Schwellenwerts, des zweiten Schwellenwerts und des dritten Schwellenwerts gemäß einer Höhe der Gleichspannung variiert.

4. Motorantriebsvorrichtung nach einem der Ansprüche 1 bis 3, wobei
die Steuereinheit (25) keine Bestimmung unter Verwendung des dritten Schwellenwerts für eine vorgeschriebene Zeitspanne seit dem Umkehren der Polarität der Gleichspannung vornimmt.

5. Motorantriebsvorrichtung (1) zum Steuern des Antriebs eines Einphasenmotors (12), wobei der Einphasenmotor einen Rotor (12a) rotiert, wobei Permanentmagneten in dem Rotor angeordnet sind, wobei die Motorantriebsvorrichtung Folgendes umfasst:

einen Wechselrichter (11), umfassend eine Vielzahl von Schaltelementen (51 bis 54), wobei der Wechselrichter unter Verwendung der Schaltelemente Gleichspannung in Wechselspannung konvertiert und die Wechselspannung an den Einphasenmotor ausgibt;

eine Detektionseinheit (20; 21), die eine physikalische Größe detektiert, die einen Betriebszustand des Einphasenmotors angibt; und

eine Steuereinheit (25), die gemäß der physikalischen Größe die Wechselspannung von dem Wechselrichter, die an den Einphasenmotor auszugeben ist, steuert, wobei

die Detektionseinheit einen Stromwert, der durch den Einphasenmotor fließt, als die physikalische Größe detektiert, **dadurch gekennzeichnet, dass**:

die Steuereinheit zwischen einem ersten Vorgang des Anhaltens der Wechselspannung von dem Wechselrichter an den Einphasenmotor in einer ersten Zeitspanne und einem zweiten Vorgang des Ausgebens der Wechselspannung an den Einphasenmotor von dem Wechselrichter in einer zweiten Zeitspanne wechselt, wenn ein Absolutwert des Stromwerts größer oder gleich einem vierten Schwellenwert ist, die zweite Zeitspanne während des Wechselns zwischen dem ersten und dem zweiten Vorgang schrittweise verkürzt und die Polarität der Wechselspannung, die der Wechselrichter an den Einphasenmotor ausgibt, umkehrt, wenn ein Absolutwert einer Änderungsrate in dem Stromwert größer oder gleich einem fünften Schwellenwert in der zweiten Zeitspanne ist.

6. Motorantriebsvorrichtung nach einem der Ansprüche 1 bis 5, wobei
die Steuereinheit (25) gemäß einer induzierten Spannung in dem Einphasenmotor basierend auf der physikalischen Größe eine Wechselspannung, die von dem Wechselrichter an den Einphasenmotor auszugeben ist, steuert.

7. Motorantriebsvorrichtung nach einem der Ansprüche 1 bis 5, wobei
die Steuereinheit (25) zumindest eine aus der Steuerung verwendet, die den Stromwert und Schwellenwerte verwendet, und der Steuerung verwendet, die eine induzierte Spannung in dem Einphasenmotor basierend auf der physikalischen Größe verwendet, um eine Wechselspannung zu steuern, die aus dem Wechselrichter an den Einphasenmotor auszugeben ist.

8. Motorantriebsvorrichtung nach einem der Ansprüche 1 bis 7, wobei
die Steuereinheit (25) ein Filtern auf der Wechselspannung, die von dem Wechselrichter auszugeben ist, anwendet und eine Steuerung durchführt, die bewirkt, dass eine gefilterte Wechselspannung eine Trapezwellenform annimmt, die durch Zeit und Spannung dargestellt wird.

9. Motorantriebsvorrichtung nach einem der Ansprüche 1 bis 7, wobei
die Steuereinheit (25) ein Filtern auf der Wechselspannung, die von dem Wechselrichter auszugeben ist, durchführt, und eine Steuerung durchführt, die die Sättigung einer gefilterten Wechselspannung zeitlich abgleicht, um mit einem Viertel einer Periode und mit drei Viertel einer Periode der Wechselspannung zusammenzufallen.

10. Motorantriebsvorrichtung nach einem der Ansprüche 1 bis 9, wobei zumindest eines der Schaltelemente (51 bis 54) unter Verwendung eines Halbleiters mit breiter Bandlücke hergestellt wird.

11. Motorantriebsvorrichtung nach Anspruch 10, wobei der Halbleiter mit breiter Bandlücke Siliciumcarbid, Galliumnitrid oder Diamant ist.

12. Elektrisches Gebläse (64), umfassend eine Motorsteuervorrichtung nach einem der Ansprüche 1 bis 11.

13. Staubsauger (61), umfassend ein elektrisches Gebläse nach Anspruch 12.

14. Handtrockner (90), umfassend ein elektrisches Gebläse nach Anspruch 12.

**Revendications**

1. Appareil d'entraînement de moteur (1) pour commander l'entraînement d'un moteur monophasé (12), le moteur monophasé faisant tourner un rotor (12a), des aimants permanents étant disposés dans le rotor, l'appareil d'entraînement de moteur comprenant :

un onduleur (11) comprenant une pluralité d'éléments de commutation (51 à 54), l'onduleur convertissant, en utilisant les éléments de commutation, une tension de courant continu en une tension de courant alternatif et délivrant en sortie la tension de courant alternatif au moteur monophasé ;

une unité de détection (20 ;21) détectant une quantité physique représentant un état de fonctionnement du moteur monophasé ; et

une unité de commande (25) commandant, conformément à la quantité physique, la tension de courant alternatif de l'onduleur à délivrer en sortie au moteur monophasé, dans lequel

l'unité de détection détecte une valeur de courant circulant dans le moteur monophasé en tant que quantité physique,

**caractérisé en ce que**

l'unité de commande provoque une sortie de la tension de courant alternatif de l'onduleur vers le moteur monophasé lorsqu'une valeur absolue de la valeur du courant est inférieure à un premier seuil, arrête la sortie de la tension de courant alternatif de l'onduleur vers le moteur monophasé lorsqu'une valeur absolue de la valeur du courant est égale ou supérieure à un deuxième seuil et inférieure à un troisième seuil, et inverse la polarité d'une tension de courant alternatif que l'onduleur délivre en sortie vers le moteur monophasé lorsqu'une valeur absolue de la valeur du courant est égale ou supérieure au troisième seuil.

2.  Appareil d'entraînement de moteur selon la revendication 1, dans lequel
    l'unité de commande (25) fait varier des niveaux du premier seuil, du deuxième seuil et du troisième seuil en fonction d'une vitesse de rotation du moteur monophasé.

3.  Appareil d'entraînement de moteur selon la revendication 1, dans lequel
    l'unité de commande (25) fait varier des niveaux du premier seuil, du deuxième seuil et du troisième seuil en fonction d'un niveau de la tension de courant continu.

4.  Appareil d'entraînement de moteur selon l'une quelconque des revendications 1 à 3, dans lequel
    l'unité de commande (25) n'effectue aucune détermination en utilisant le troisième seuil pendant une période prescrite depuis l'inversion de la polarité de la tension de courant alternatif.

5.  Appareil d'entraînement de moteur (1) pour commander l'entraînement d'un moteur monophasé (12), le moteur monophasé faisant tourner un rotor (12a), des aimants permanents étant disposés dans le rotor, l'appareil d'entraînement de moteur comprenant :

    un onduleur (11) comprenant une pluralité d'éléments de commutation (51 à 54), l'onduleur convertissant, en utilisant les éléments de commutation, une tension de courant continu en une tension de courant alternatif et délivrant en sortie la tension de courant alternatif au moteur monophasé ;

    une unité de détection (20 ;21) détectant une quantité physique représentant un état de fonctionnement du moteur monophasé ; et

    une unité de commande (25) commandant, en fonction de la quantité physique, la tension de courant alternatif provenant de l'onduleur à délivrer en sortie au moteur monophasé,

    dans lequel

    l'unité de détection détecte une valeur de courant circulant dans le moteur monophasé en tant que quantité physique,

    **caractérisé en ce que**

    l'unité de commande alterne entre un premier processus d'arrêt de la tension de courant alternatif depuis l'onduleur vers le moteur monophasé dans une première période et un second processus de délivrance en sortie de la tension de courant alternatif vers le moteur monophasé depuis l'onduleur dans une seconde période lorsqu'une valeur absolue de la valeur du courant est égale ou supérieure à un quatrième seuil, raccourcit la seconde période pas à pas pendant l'alternance des premier et second processus, et inverse la polarité d'une tension de courant alternatif que l'onduleur délivre en sortie vers le moteur monophasé lorsqu'une valeur absolue d'un taux de changement de la valeur du courant est égale ou supérieure à un cinquième seuil dans la seconde période.

6.  Appareil d'entraînement de moteur selon l'une quelconque des revendications 1 à 5, dans lequel
    l'unité de commande (25) commande, en fonction d'une tension induite dans le moteur monophasé sur la base de la quantité physique, une tension de courant alternatif devant être délivrée en sortie depuis l'onduleur vers le moteur monophasé.

7.  Appareil d'entraînement de moteur selon l'une quelconque des revendications 1 à 5, dans lequel
    l'unité de commande (25) utilise au moins une parmi la commande qui utilise la valeur du courant et des seuils ou la commande qui utilise une tension induite dans le moteur monophasé sur la base de la quantité physique pour commander une tension de courant alternatif à délivrer en sortir depuis l'onduleur vers le moteur monophasé.

8. Appareil d'entraînement de moteur selon l'une quelconque des revendications 1 à 7, dans lequel l'unité de commande (25) exécute un filtrage sur la tension de courant alternatif devant être délivrée en sortie depuis l'onduleur et exécute une commande qui amène une tension de courant alternatif filtrée à prendre une forme d'onde trapézoïdale représentée par le temps et la tension.

9. Appareil d'entraînement de moteur selon l'une quelconque des revendications 1 à 7, dans lequel l'unité de commande (25) effectue un filtrage sur la tension de courant alternatif devant être délivrée en sortie par l'onduleur et effectue une commande qui synchronise la saturation d'une tension de courant alternatif filtrée pour qu'elle coïncide avec un quart de cycle et un trois-quarts de cycle de la tension de courant alternatif.

10. Appareil d'entraînement de moteur selon l'une quelconque des revendications 1 à 9, dans lequel au moins l'un des éléments de commutation (51 à 54) est réalisé en utilisant un semi-conducteur à large bande interdite.

11. Appareil d'entraînement de moteur selon la revendication 10, dans lequel le semi-conducteur à large bande interdite est du carbure de silicium, du nitrure de gallium ou du diamant.

12. Ventilateur électrique (64) comprenant l'appareil d'entraînement de moteur selon l'une quelconque des revendications 1 à 11.

13. Aspirateur (61) comprenant le ventilateur électrique selon la revendication 12.

14. Sèche-mains (90) comprenant le ventilateur électrique selon la revendication 12.

# FIG.1

MOTOR DRIVING APPARATUS

POWER SUPPLY 10

INVERTER 11

12

12a

A 21

ANALOG-TO-DIGITAL CONVERTER 30

20

DRIVING SIGNAL GENERATION UNIT 32

ANALOG-TO-DIGITAL CONVERTER 31

PROCESSOR 25 33

MEMORY 34

CONTROL UNIT

# FIG.2

<u>11</u>

# FIG.3

# FIG.4

# FIG.5

# FIG.6

LOW ROTATIONAL SPEED

$V_m(\theta_e)$

THIRD THRESHOLD

SECOND THRESHOLD (UPPER LIMIT)

FIRST THRESHOLD (LOWER LIMIT)

$I_m(\theta_e)$

$e_m(\theta_e)$

HIGH ROTATIONAL SPEED

THIRD THRESHOLD

SECOND THRESHOLD (UPPER LIMIT)

FIRST THRESHOLD (LOWER LIMIT)

EP 3 937 367 B1

# FIG.7

# FIG.8

# FIG.9

# FIG.10

# FIG.11

di/dt> FIFTH THRESHOLD

di

dt

$|I_m(\theta_e)|$

$I_m(\theta_e)$

$V_{mfil}(\theta_e)$

$V_m(\theta_e)$          $e_m(\theta_e)$

# FIG.12

START

S1
ABSOLUTE VALUE OF CURRENT≥FIRST THRESHOLD? — NO →

S2
OUTPUT ALTERNATING-CURRENT VOLTAGE

YES

S3
ABSOLUTE VALUE OF CURRENT≥SECOND THRESHOLD? — NO →

S4
MAINTAIN

YES

S5
ABSOLUTE VALUE OF CURRENT≥THIRD THRESHOLD? — NO →

S6
HALT

YES

S7
REVERSE

END

# FIG.13

```
                        START

                          │
                          ▼
                 ╱─────────────────╲              S5
                ╱    ABSOLUTE        ╲        NO
               ⟨ VALUE OF CURRENT≥THIRD ⟩──────────────┐
                ╲    THRESHOLD?     ╱                   │
                 ╲─────────────────╱                    │
                          │                             │
                        YES   S7                        ▼        S2
             ┌──────────────────────┐      ┌──────────────────────────┐
             │       REVERSE        │      │  OUTPUT ALTERNATING-     │
             │                      │      │  CURRENT VOLTAGE         │
             └──────────────────────┘      └──────────────────────────┘
                          │                             │
                          ▼◄────────────────────────────┘

                         END
```

# FIG.14

```
                    ┌─────────────┐
                    │    START    │
                    └──────┬──────┘
                           │
                           ▼
                    ╱─────────────╲                  S11
                  ╱  ABSOLUTE       ╲
                ╱   VALUE OF          ╲    NO
               ╱  CURRENT≥FOURTH       ╲──────────┐
                ╲   THRESHOLD?        ╱            │
                  ╲                 ╱              ▼
                    ╲─────────────╱        ┌──────────────────┐  S12
                           │ YES           │ OUTPUT ALTERNATING-│
                           │       S13     │ CURRENT VOLTAGE    │
                    ┌──────▼──────────┐    └──────────────────┘
                    │ OUTPUT BY PWM   │
                    │ CONTROL         │
                    └──────┬──────────┘
                           │
                           ▼
                    ╱─────────────╲                  S14
                  ╱  ABSOLUTE       ╲
         NO     ╱  VALUE OF RATE OF  ╲
       ┌───────  CHANGE IN            ╲
       │        ╲ CURRENT≥FIFTH      ╱
       │          ╲  THRESHOLD?    ╱
       │            ╲─────────────╱
       │                   │ YES      S15
       │            ┌──────▼──────┐
       │            │   REVERSE   │
       │            └──────┬──────┘
       │                   │
       │                   ▼
       │            ┌─────────────┐
       │            │     END     │
       │            └─────────────┘
```

# FIG.15

```
           START

             │
             ▼
        ┌─────────────┐  S14
      ╱ ABSOLUTE       ╲
     ╱  VALUE OF RATE OF ╲   NO
    ╱   CHANGE IN         ╲────────────┐
    ╲   CURRENT≥FIFTH     ╱            │
     ╲  THRESHOLD?       ╱             ▼
      ╲                 ╱       ┌──────────────────┐  S12
        └─────────────┘        │ OUTPUT ALTERNATING-│
             │ YES             │ CURRENT VOLTAGE    │
             ▼    S15          └──────────────────┘
        ┌─────────────┐
        │  REVERSE    │
        └─────────────┘
             │
             ▼
           END
```

# FIG.16

# FIG.17

**EP 3 937 367 B1**

**REFERENCES CITED IN THE DESCRIPTION**

**Patent documents cited in the description**

- JP 2017055658 A

- US 2013234631 A1, BATEMAN CHRISTOPHER JOHN